# EUROPÄISCHE PATENTSCHRIFT

(11) **EP 4 526 554 B1**
(45) Veröffentlichungstag und Bekanntmachung des Hinweises auf die Patenterteilung: **04.03.2026**
(21) Anmeldenummer: 23727804.9
(22) Anmeldetag: 12.05.2023
(51) Int. Cl.: F01N 3/01, F01N 3/021

(54) **ABGASBEHANDLUNGSEINRICHTUNG UND DAMIT AUSGESTATTETE KLEINFEUERUNGSANLAGE**
EXHAUST GAS AFTERTREATMENT DEVICE AND SMALL COMBUSTION MACHINE SUPPLIED THEREWITH
DISPOSITIF DE POST-TRAITEMENT ET PETIT MACHINE À COMBUSTION ÉQUIPÉE AVEC CELUI-CI

(30) Priorität: 16.05.2022 DE 102022204799
(43) Veröffentlichungstag der Anmeldung: 26.03.2025
(73) Patentinhaber: Fraunhofer-Gesellschaft zur Förderung der angewandten Forschung e.V., 80686 München (DE)
(72) Erfinder: ALEYSA, Mohammadshayesh, 70569 Stuttgart (DE)
(74) Vertreter: Friese Goeden Patentanwälte PartGmbB
(86) Internationale Anmeldenummer: PCT/EP2023/062728
(87) Internationale Veröffentlichungsnummer: WO 2023/222531

(56) Entgegenhaltungen:
- EP-A2- 1 849 513
- CN-U- 205 578 072
- DE-A1- 102019 218 807
- FR-A- 1 120 954
- JP-A- 2017 080 721

## Beschreibung

Die Erfindung betrifft eine Abgasbehandlungseinrichtung zur Behandlung von Abgas aus einem Verbrennungsprozess, mit einem hitzebeständigen Körper, der einen an gegenüberliegenden Enden offenen Hohlraum, der dafür bestimmt ist, von dem Abgas durchströmt zu werden, und eine Mehrzahl von ersten Wandabschnitten aufweist, von denen jeder einen jeweiligen ersten Abschnitt des Hohlraumes begrenzt, einen äußeren Bereich und einen inneren Bereich hat, der aus einer Mehrzahl von plattenförmigen Vorsprüngen besteht, die sich jeweils vom äußeren Bereich ausgehend nach innen zu einem zentralen Bereich des jeweiligen ersten Hohlraumabschnittes hin erstrecken, in ihrer quer zu einer Längsachse des Hohlraumes gerichteten Breite zu dem zentralen Bereich hin verjüngen und seitlich voneinander beabstandet sind, wobei jeder erste Wandabschnitt relativ zu einem jeweils benachbarten ersten Wandabschnitt um einen vorgebbaren Winkel in eine Richtung verdreht ist, die bei jedem ersten Wandabschnitt die gleiche ist.

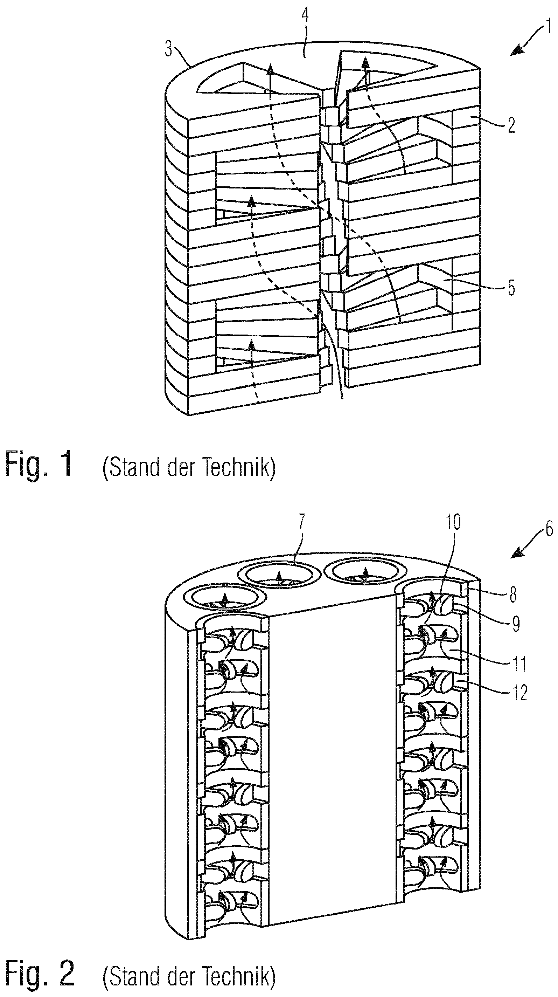

Eine solche Abgasbehandlungseinrichtung ist aus der DE 10 2019 218 807 A1 bekannt und auch in der unveröffentlichten deutschen Patentanmeldung DE 10 2021 205 653.9 beschrieben und dargestellt. Bei dieser Abgasbehandlungseinrichtung ist der hitzebeständige Körper ausschließlich aus übereinander gestapelten ersten Wandabschnitten zusammengesetzt, von denen jeder ein jeweiliges scheibenförmiges Element ist, das relativ zu dem unmittelbar benachbarten scheibenförmigen Element des Stapels um einen vorgebbaren Winkel verdreht ist. Infolgedessen sind die durch die seitlichen Abstände zwischen den Vorsprüngen des jeweiligen scheibenförmigen Elements gebildeten Zwischenräume durch die Vorsprünge des unmittelbar benachbarten scheibenförmigen Elements teilweise abgedeckt. Durch diese Anordnung der scheibenförmigen Elemente wird der von Abgas zu durchströmende Hohlraum des Körpers in mehrere zwischen den sich gegenüberliegenden Enden des Körpers erstreckende schraubenförmige Strömungskanäle unterteilt, deren jeweilige Wandung wendeltreppenartig gestuft ist, wobei die Anzahl der Strömungskanäle der Zahl der Vorsprünge entspricht, die jedes scheibenförmige Element in gleicher Anzahl aufweist. Bei dem dargestellten Beispiel der bekannten Abgasbehandlungseinrichtung beträgt die Anzahl der Vorsprünge bei jedem scheibenförmigen Element vier, woraus insgesamt vier schraubenförmige, wendeltreppenartig gestufte Strömungskanäle für das sie durchströmende Abgas zwischen den sich gegenüberliegenden Enden des Körpers resultieren. Durch diese Form und Anordnung der Strömungskanäle im Körper erfährt das an einem Ende des Körpers in die Kanäle eintretende Abgas auf seinem Weg zu dessen anderen Ende des Körpers einen im Wesentlichen schraubenförmigen, turbulenten Verlauf durch jeden der Strömungskanäle, wobei die durch die Stufen der Wandung der Strömungskanäle geschaffene Rauheit der Oberfläche der Wandung der Strömungskanäle die Turbulenz der Abgasströmung noch erhöht. Fig. 1 der beiliegenden Zeichnungen zeigt schematisch einen Längsschnitt durch den Körper einer bekannten Abgasbehandlungseinrichtung, wobei die durch die schraubenförmigen, wendeltreppenartig gestuften Strömungskanäle von unten nach oben geleiteten Abgasströme durch teilweise gestrichelte, schraubenlinienförmige Pfeile angedeutet sind.

Obwohl mit dieser bekannten Abgasbehandlungseirichtung eine wesentlich effizientere Abgasreinigung im Vergleich zu einer anderen bekannten Abgasbehandlungseinrichtung, bei der das Abgas durch eine Mehrzahl von aufeinander gestapelten Pall-Ringen geleitet wird, wie es bei der aus der DE 20 2016 100 216 U1 bekannten Abgasbehandlungseinrichtung oder bei der aus der WO 2014/198758 A1 bekannten Abgasbehandlungseinrichtung der Fall ist, erzielt wird, besteht bei der Abscheidung und Ablagerung von Feinstäuben ein Bedarf für eine intensivere Feinstaubabscheidung und -ablagerung, besonders dann, wenn die Abgasbehandlungseinrichtung bei kleineren Einzelraumheizanlagen eingesetzt wird.

Fig. 2 der beigefügten Zeichnungen zeigt schematisch einen Längsschnitt durch eine bekannte Abgasbehandlungseinrichtung mit mehreren Strömungskanälen, die jeweils durch eine Mehrzahl von aufeinandergestapelten Pall-Ringen gebildet sind, wobei der vielfach umgelenkte Strömungsverlauf des durch die Pall-Ringe geleiteten Abgases durch Pfeile angedeutet ist. Bei den Pall-Ringen der bekannten Abgasbehandlungseinrichtung wechseln sich in Längsrichtung der Strömungskanäle Längsabschnitte mit radial nach innen gerichteten in Umfangsrichtung beabstandeten fingerförmigen Vorsprüngen, die in Umfangsrichtung eine konstante Dicke haben, mit Längsabschnitten mit einer glatten zylindrischen Innenwand ab. In Umfangsrichtung neben jedem Vorsprung befindet sich auf jeweils einer Seite eine Ausnehmung in der Wand des jeweiligen Längsabschnittes. Infolgedessen bleibt die Größe der Querschnittsfläche des jeweiligen Hohlraumes über die gesamte Länge des jeweiligen Stapels von Pall-Ringen konstant, so dass trotz der vielfachen Umlenkung des Abgasstromes die Strömungsgeschwindigkeit des Abgasstromes zwischen Ein- und Ausgang des jeweiligen Pall-Ring-Stapels im Wesentlichen konstant bleibt und die Abscheidung und Ablagerung von Feinstaub an der Innenwand der Pall-Ringe insbesondere bei deren Einsatz in Einzelraumheizanlagen nur mäßig ist.

Die Aufgabe der Erfindung besteht daher darin, eine Abgasbehandlungseinrichtung der eingangs beschriebenen Art so weiterzuentwickeln, dass die Abscheidung und Ablagerung von Feinstaub in dem von Abgas durchströmten Hohlraum des Körpers der Abgasbehandlungseinrichtung gesteigert wird.

Weitere Abgasnachbehandlungseinrichtungen sind in den folgenden Schriften publiziert: CN 205 578 072 U, FR 1 120 954 A, EP 1 849 513 A2, DE 10 2019 218807 A1 oder JP 2017 080721 A.

Die Aufgabe wird erfindungsgemäß durch eine Abgasbehandlungseinrichtung gemäß Anspruch 1 und eine Kleinfeuerungsanlage nach 12 gelöst. Vorteilhafte Weiterbildungen der Erfindung finden sich in den Unteransprüchen.

Die Aufgabe der Erfindung wird dadurch gelöst, dass der Körper der Abgasbehandlungseinrichtung eine Mehrzahl von zweiten Wandabschnitten hat, von denen jeder einen jeweiligen zweiten Abschnitt des Hohlraumes begrenzt und jeweils zwischen zwei benachbarten ersten Wandabschnitten angeordnet ist, wobei die Querschnittsfläche eines jeden zweiten Hohlraumabschnittes größer ist als die Querschnittsfläche eines jeden ersten Hohlraumabschnittes.

Durch die Erweiterung der Querschnittsflächen der zweiten Hohlraumabschnitte gegenüber der Querschnittsflächen der ersten Hohlraumabschnitte entstehen in den zweiten Hohlraumabschnitten Zonen mit reduzierter Strömungsgeschwindigkeit des durch den Hohlraum geleiteten Abgases, das in den ersten Hohlraumabschnitten aufgrund der dort bestehenden geringeren Querschnittsfläche wieder beschleunigt wird. Das sich abwechselnde Abbremsen und Wiederbeschleunigen des Abgasstromes in seinem durch den Hohlraum des Körpers gebildeten Strömungskanal bewirkt eine zusätzliche Verwirbelung des Abgasstromes in den zweiten Hohlraumabschnitten. Gleichzeitig erhöht sich die Verweilzeit des Abgases in der Abgasbehandlungseinrichtung, wodurch die Abgasreinigung insgesamt noch effizienter wird. Die zusätzliche Verwirbelung des Abgasstromes und die Reduzierung der Strömungsgeschwindigkeit in den zweiten Hohlraumabschnitten begünstigen die Abscheidung und Ablagerung von Feinstaubpartikeln in dem Hohlraum der erfindungsgemäßen Abgasbehandlungseinrichtung erheblich, so dass deutlich mehr Feinstaub abgeschieden und abgelagert werden kann als es mit den bekannten Abgasbehandlungseinrichtungen möglich ist.

Die Abgasbehandlungseinrichtung gemäß der Erfindung kann insbesondere in Feuerstätten für Biomasse in der technischen Gebäudeausstattung eingesetzt werden. Beispielsweise eignet sich die Abgasbehandlungseinrichtung für Kleinfeuerungsanlagen wie Kaminöfen oder Kachelöfen oder Küchenherde. In anderen Ausführungsformen der Erfindung eignet sich die Abgasbehandlungseinrichtung für Heizkessel einer zentralen Wärmeversorgung, welcher beispielsweise mit Scheitholz oder Pellets oder Hackschnitzeln betrieben wird. Hierzu wird die Abgasbehandlungseinrichtung bevorzugt in die jeweilige Kleinfeuerungsanlage eingebaut. Die Abgasbehandlungseinrichtung kann dabei mit geringem Aufwand auf den zukünftigen Einsatz optimiert werden.

Nachfolgend wird die Erfindung anhand der Beschreibung von Ausführungsbeispielen und unter Bezugnahme auf die beigefügten Zeichnungen näher erläutert. In den Zeichnungen zeigt
Fig. 1 einen schematischen Längsschnitt durch den perspektivisch dargestellten Körper einer Abgasbehandlungseinrichtung nach dem Stand der Technik, wobei der kontinuierliche schraubenförmige Verlauf der Abgasströme durch die schraubenförmigen, wendeltreppenartig gestuften Strömungskanäle, die von aufeinandergestapelten scheibenförmigen Elementen gebildet werden, durch teilweise gestrichelte Pfeile angedeutet ist;
Fig. 2 einen schematischen Längsschnitt durch den perspektivisch dargestellten Körper einer Abgasbehandlungseinrichtung nach dem Stand der Technik, wobei der Körper der Abgasbehandlungseinrichtung eine Vielzahl von aufeinandergestapelten Pall-Ringen in mehreren in Umfangsrichtung voneinander beabstandeten Stapeln aufweist und der Verlauf der Abgasströme durch die von Pall-Ringen begrenzten Strömungskanäle durch Pfeile angedeutet ist; und

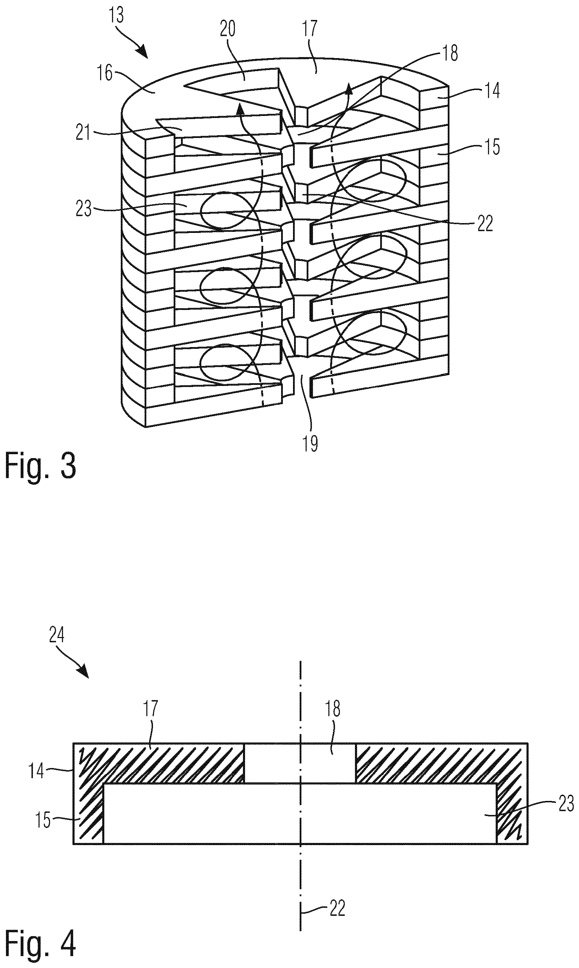

Fig. 3 einen schematischen Längsschnitt durch den perspektivisch dargestellten Körper eines ersten Ausführungsbeispiels einer erfindungsgemäßen Abgasbehandlungseinrichtung, wobei sich erste Wandabschnitte mit radial nach innen ragenden, in Umfangsrichtung beabstandeten, plattenförmigen Vorsprüngen mit zweiten Wandabschnitten mit glatten zylindrischen Wänden in Längsrichtung des Körpers abwechseln und die vielfachen Richtungsänderungen und Wirbelbildungen des Abgasstromes auf seinem Weg von unten nach oben durch den Hohlraum des Körpers durch teilweise gestrichelte Pfeile angedeutet ist.
Fig. 4 einen schematischen Längsschnitt durch erste und zweite Wandabschnitte gemäß einer zweiten Ausführungsform.
Fig. 5 bis 9 ein drittes Ausführungsbeispiel einer erfindungsgemäßen Abgasbehandlungseinrichtung.

Die in den Zeichnungen (Figuren 1 bis 9) verwendeten Bezugsziffern haben die folgende Bedeutung:
In Fig. 1:
   - 1: Körper
   - 2: scheibenförmiges Element
   - 3: ringförmiger Bereich
   - 4: Vorsprünge
   - 5: Strömungskanäle
In Fig. 2:
   - 6: Körper
   - 7: Stapel
   - 8: Pall-Ringe
   - 9: erster Wandabschnitt
   - 10: Vorsprünge
   - 11: zweiter Wandabschnitt
   - 12: Ausnehmung
In Fig. 3 bis 9:
   - 13: Körper
   - 14: erster Wandabschnitt
   - 15: zweiter Wandabschnitt
   - 16: äußerer Bereich
   - 17: Vorsprung
   - 18: zentraler Bereich
   - 19: Hohlraum
   - 20: Teilbereich
   - 21: erster Hohlraumabschnitt
   - 22: Längsachse
   - 23: zweiter Hohlraumabschnitt
   - 3: elektrostatische Staubabscheidung
   - 30: Isolator
   - 31: Sprühelektrode
   - 32: Anschlusselektrode

Wie in den Zeichnungen ersichtlich ist, zeigt Fig. 1 eine den Oberbegriff des Anspruches 1 bildende Abgasbehandlungseinrichtung nach dem Stand der Technik, bei der der Körper 1 der Abgasbehandlungseinrichtung eine Mehrzahl von aufeinander gestapelten scheibenförmigen Elementen 2 aufweist, die mehrere von einem äußeren ringförmigen Bereich 3 ausgehende radial nach innen ragende plattenförmige Vorsprünge 4 haben, die in Umfangsrichtung voneinander beabstandet sind, wobei die scheibenförmigen Elemente 2 um einen vorgebbaren Winkel relativ zueinander verdreht sind, so dass sich mehrere schraubenförmig gewendelte Strömungskanäle 5 ergeben, durch die das zu behandelnde Abgas von unten nach oben schraubenförmig strömt und dabei verwirbelt wird, wie durch die teilweise gestrichelten Pfeile angedeutet ist.

Fig. 2 zeigt eine weitere Abgasbehandlungseinrichtung nach dem Stand der Technik, bei der der Körper 6 der Abgasbehandlungseinrichtung mehrere Stapel 7 von aufeinander gestapelten Pall-Ringen 8 aufweist, die jeweils einen ersten Wandabschnitt 9 mit aus der Wand radial nach innen ragenden fingerförmigen Vorsprüngen 10 und eine an den ersten Wandabschnitt 9 sich anschließenden zweiten Wandabschnitt 11 mit einer glatten zylindrischen Innenwand haben. Seitlich neben jedem Vorsprung 10 befindet sich eine Ausnehmung 12. Jeder Stapel 7 von Pall-Ringen 8 bildet einen Strömungskanal, durch den das zu behandelnde Abgas von unten nach oben durchgeleitet wird, wobei es vielfach umgelenkt und dabei verwirbelt wird, wie durch die Pfeile angedeutet ist.

Die Verringerung der Querschnittsfläche des Strömungskanals durch die radial nach innen ragenden fingerförmigen Vorsprünge 10 der ersten Wandabschnitte 9 der Pall- Ringe 8 wird durch die Ausnehmungen 12 wieder kompensiert, so dass sich die gleiche Querschnittsfläche des Strömungskanals in den ersten Wandabschnitten 9 wie in den zweiten Wandabschnitten 11 ergibt. Infolgedessen bleibt auch die Strömungsgeschwindigkeit der Abgasströme über die gesamte Höhe des Körpers 6 im Wesentlichen konstant.

Der aus Pallringen 8 zusammengesetzte Körper 6 weist eine Masse von etwa 2 kg bis etwa 3 kg auf.

Fig. 3 zeigt ein erstes Ausführungsbeispiel der erfindungsgemäßen Abgasbehandlungseinrichtung. Sie weist einen Körper 13 auf, der eine Mehrzahl von ersten Wandabschnitten 14 und eine Mehrzahl von zweiten Wandabschnitten 15 hat, wobei die ersten und zweiten Wandabschnitte 14, 15 dünne Scheiben mit zwei verschiedenen Querschnitten sind, welche stapelförmig angeordnet sind und sich in der Reihenfolge abwechseln. Dies bedeutet, dass zwischen jeweils zwei benachbarten ersten Wandabschnitten 14 ein zweiter Wandabschnitt 15 angeordnet ist. Im dargestellten Beispiel wird jeder Wandabschnitt 14, 15 durch ein jeweiliges scheibenförmiges Element gebildet, das außen eine zylindrische Oberfläche hat. Alternativ kann die äußere Oberfläche der scheibenförmigen Elemente auch polygonal oder elliptisch sein. Sämtliche Wandabschnitte 14, 15 können aber auch aus einem einzelnen einstückigen Block sein, der wie die scheibenförmigen Elemente außen zylindrisch, wie dargestellt, oder polygonal sein kann.

Jeder erste Wandabschnitt 14 hat einen äußeren, im Beispiel ringförmigen Bereich 16 und einen inneren Bereich, der aus einer Mehrzahl von plattenförmigen Vorsprüngen 17 besteht, von denen jeder sich ausgehend vom äußeren Bereich 16 radial nach innen zu einem zentralen Bereich 18 des im Körper 13 gebildeten Hohlraums 19 hin erstreckt und sich in seiner quer zu einer zentralen Längsachse 22 des Hohlraumes 19 gerichteten Breite, ausgehend von dem äußeren Bereich 16 zu dem zentralen Bereich 18 hin verjüngt. Die parallel zur Längsachse 22 des Hohlraumes 19 gerichtete Dicke eines jeden Vorsprungs 17 ist im dargestellten Beispiel hingegen konstant. Die plattenförmigen Vorsprünge 17 sind in Umfangsrichtung voneinander beabstandet, wodurch ein annähernd dreiecksförmiger Teilbereich 20 des von jedem ersten Wandabschnitt 14 begrenzten ersten Hohlraumabschnittes 21 zwischen jeweils zwei benachbarten Vorsprüngen 17 des ersten Wandabschnittes 14 entsteht. Im dargestellten Beispiel hat jeder erste Wandabschnitt 14 vier in Form und Größe gleiche Vorsprünge 17. Dem entsprechend sind vier in Form und Größe gleiche Teilbereiche 20 zwischen den Vorsprüngen 17 des ersten Wandabschnittes 14 vorhanden. Alternativ können aber auch mehr oder weniger Vorsprünge als vier, z. B. drei, fünf oder sechs Vorsprünge vorgesehen sein.

Die Vorsprünge 17 des ersten Wandabschnittes 14 sind im Wesentlichen horizontal angeordnet. In einigen Ausführungsformen der Erfindung kann der Winkel zwischen der Längsachse 22 und einem in der Ebene der Vorsprünge 17 liegenden Vektor zwischen etwa 85° und etwa 95° oder zwischen etwa 87° und etwa 93° oder zwischen etwa 89° und etwa 91° betragen.

Der zentrale Bereich 18 kann in einigen Ausführungsformen der Erfindung einen Durchmesser von etwa 1 mm bis etwa 150 mm aufweisen. In einigen Ausführungsformen der Erfindung kann der zentrale Bereich 18 auch entfallen. In einigen Ausführungsformen der Erfindung kann der zentrale Bereich 18 nach der Herstellung der ersten Wandabschnitte 14 entfallen, d.h. die Spitzen der Vorsprünge 17 des ersten Wandabschnittes 14 berühren sich. Dies schließt nicht aus, dass durch thermische Spannungen bei der Gebrauch der Abgasnachbehandlungseinrichtung diese Verbindung zwischen den Spitzen der Vorsprünge 17 der ersten Wandabschnitte 14 aufbrechen und sich dadurch ein zentraler Bereich 18 ausbildet.

In einigen Ausführungen der Erfindung kann der Körper 13 von einem ersten, in Fig. 3 untenteren Ende zu seinem zweiten, in Figur 3 oberen Ende hin durchströmt werden, ohne dass eine Strömungsumkehr erfolgt. In einigen Ausführungsformen der Erfindung kann am Einlass eine nicht dargestellte Blende vorhanden sein, welche den zentralen Bereich 18 abdeckt. Hierdurch kann das Eindringen von Rauchgasen in den zentralen Bereich 18 im Regelbetrieb vermindert oder verhindert werden. Erst bei Verstopfung des Abgaspfades durch Ruß oder Staub dringt das Rauchgas durch den entstehenden Abgasgegendruck in den zentralen Bereich 18 ein, welcher auf diese Weise den Rückstau in das Gebäude verhindert.

Jeder zwischen jeweils zwei benachbarten ersten Wandabschnitten 14 angeordneter zweiter Wandabschnitt 15 begrenzt einen zweiten Hohlraumabschnitt 23 des Hohlraumes 19, der eine zylindrische Form hat. Alternativ kann der zweite Hohlraumabschnitt auch eine polygonale Form haben. Jede zwischen jeweils zwei in Umfangsrichtung benachbarten Vorsprüngen 17 in Umfangsrichtung sich erstreckende innere Begrenzungsfläche des äußeren Bereichs 16 des jeweiligen ersten Wandabschnittes 14 hat den gleichen Krümmungsradius wie die innere zylindrische Begrenzungsfläche des jeweiligen zweiten Wandabschnittes 15, wobei diese beiden Begrenzungsflächen in Axialrichtung einen stufenlosen Übergang zwischen sich haben. Der Übergang zwischen diesen beiden Begrenzungsflächen kann aber auch gestuft sein, wenn wie bei einem alternativen, nicht gezeigten Ausführungsbeispiel vorgesehen, der Durchmesser des zweiten Hohlraumabschnittes 23 größer oder kleiner als der Durchmesser zwischen zwei sich gegenüberliegende Begrenzungsflächen des äußeren Bereichs 16 des jeweiligen ersten Wandabschnittes 14 ist. Alternativ kann ein stufenförmiger Übergang zwischen der Begrenzungsfläche des äußeren Bereichs 16 des ersten Wandabschnittes 14 und der inneren Begrenzungsfläche des benachbarten zweiten Wandabschnittes 15 durch einen geradlinigen Verlauf der Begrenzungsfläche des äußeren Bereichs 16 des ersten Wandabschnittes 14 und/ oder durch einen polygonalen Verlauf der inneren Begrenzungsfläche des zweiten Wandabschnittes 15 geschaffen werden. Ein stufenförmiger Übergang zwischen diesen beiden Begrenzungsflächen in Axialrichtung fördert die Verwirbelung und Durchmischung des Abgases im Hohlraum 19.

Jeder erste Wandabschnitt 14 ist relativ zu dem in Axialrichtung benachbarten ersten Wandabschnitt 14 um einen vorgegebenen Winkel verdreht. Im dargestellten Ausführungsbeispiel beträgt der Drehwinkel 45°. Alternativ kann auch ein anderer Drehwinkel der ersten Wandabschnitte 14 gewählt werden. Vorzugsweise liegen die alternativen Drehwinkel im Bereich zwischen 30° und 60°. Beispielsweise beträgt der Drehwinkel 30°, 36° 45° und 60° bei einer Anzahl von 6, 5, 4 bzw. 3 Vorsprüngen der ersten Wandabschnitte 14.

Dadurch dass jeder zweite Hohlraumabschnitt 23 eine vollzylindrische Form hat und jeder erste Hohlraumabschnitt 21 nur aus den zwischen den Vorsprüngen 17 angeordneten Teilbereichen 20 und dem relativ kleinen zentralen Bereich 18 besteht, ist bei gleichen oder ähnlich großen Durchmessern dieser Hohlraumabschnitte 21 und 23 die Querschnittsfläche eines jeden zweiten Hohlraumabschnittes 23 in jedem Fall deutlich größer als die eines jeden ersten Hohlraumabschnittes 21. Die relativ größeren Querschnittsflächen der zweiten Hohlraumabschnitte 23 bilden jeweils Zonen mit geringerer Strömungsgeschwindigkeit des Abgases, wogegen die relativ kleineren Querschnittsflächen der ersten Hohlraumabschnitte 21 eine höhere Strömungsgeschwindigkeit des Abgases in den ersten Hohlraumabschnitten 21 bewirken. Da sich die ersten Wandabschnitte 14 und damit die ersten Hohlraumabschnitte 21 in Längsrichtung des Hohlraumes 19 mit den zweiten Wandabschnitten 15 und den zugehörigen zweiten Hohlraumabschnitten 23 in ihrer Anordnung abwechseln, wird das durch den Hohlraum 19 strömende Abgas abwechselnd abgebremst und wieder beschleunigt, je nachdem, ob es gerade durch einen im Querschnitt größeren zweiten Hohlraumabschnitt 23 oder durch einen im Querschnitt kleineren ersten Hohlraumabschnitt 21 strömt. Dieses abwechselnde Abbremsen und wieder Beschleunigen des Abgases während es von unten nach oben durch den Hohlraum 19 des Körpers 13 strömt bewirkt eine vermehrte Verwirbelung des Abgases insbesondere in den zweiten Hohlraumabschnitten 23, wie durch die Strömungspfeile in Fig. 3 angedeutet ist. Gleichzeitig wird die Abscheidung und Ablagerung von Feinstaub in den langsamer durchströmten zweiten Hohlraumabschnitten 23 gefördert.

Der Drehwinkelversatz zwischen den ersten Wandabschnitten 14 bewirkt eine häufige Strömungsumlenkung des Abgases auf seinem Weg von unten nach oben durch den Hohlraum 19, wie ebenfalls durch die Strömungspfeile in Fig. 3 sichtbar ist. Diese häufige Strömungsumlenkung des Abgases auf dessen Weg durch den Hohlraum 19 trägt ebenfalls zur Verwirbelung des Abgases bei.

Der Drehwinkelversatz zwischen den ersten Wandabschnitten 14 hat auch noch den weiteren Effekt, dass die vollzylindrischen zweiten Hohlraumabschnitte 23 durch die Vorsprünge 17 der jeweils benachbarten ersten Wandabschnitte 14 teilweise verdeckt werden. Besonders die in Strömungsrichtung auf einen zweiten Hohlraumabschnitt 23 nachfolgenden Vorsprünge 17 stellen Prallflächen dar, auf die das Abgas auftrifft, wodurch nicht nur die Verwirbelung des Abgases begünstigt wird, sondern auch die Abscheidung und Ablagerung von Feinstäuben an den Vorsprüngen 17.

Die ersten und zweiten Wandabschnitte 14 und 15 können jeweils eine Dicke von etwa 5 mm bis etwa 50 mm oder von etwa 5 mm bis etwa 15 mm aufweisen. In anderen Ausführungsformen der Erfindung können die ersten und zweiten Wandabschnitte 14 und 15 jeweils eine Dicke von etwa 5 mm etwa 8 mm. In anderen Ausführungsformen der Erfindung können die ersten und zweiten Wandabschnitte 14 und 15 jeweils eine Dicke von etwa 6 mm bis etwa 10 mm aufweisen. In wiederum anderen Ausführungsformen der Erfindung können die ersten und zweiten Wandabschnitte 14 und 15 jeweils eine Dicke von etwa 25 mm bis etwa 50 mm aufweisen. Die Gesamthöhe des Körpers 13 kann in einigen Ausführungsformen der Erfindung zwischen etwa 12 cm und etwa 20 cm betragen. In anderen Ausführungsformen der Erfindung kann die Gesamthöhe des Körpers 13 zwischen etwa 15 cm und etwa 25 cm betragen. In wiederum anderen Ausführungsformen der Erfindung kann die Gesamthöhe des Körpers 13 zwischen etwa 16 cm und etwa 20 cm betragen. Die erfindungsgemäße Abgasbehandlungseinrichtung kann somit flexibel an unterschiedliche Einsatzbedingungen bzw. Kundenwünsche angepasst werden.

Die Dicke der zweiten Wandabschnitte 15 kann zwischen etwa 0,8 bis etwa 5 oder zwischen etwa 0,8 bis etwa 3 mal der Dicke der ersten Wandabschnitte 14 entsprechen. In einigen Ausführungsformen der Erfindung können die ersten und zweiten Wandabschnitte 14 und 15 gleich Dick sein.

Die Masse des Körpers 13 kann in einigen Ausführungsformen zwischen etwa 7 kg und etwa 10 kg betragen. Durch die erhöhte Masse und die damit einhergehende erhöhte Wärmekapazität werden Temperaturschwankungen der Abgasbehandlungseinrichtung ausgeglichen, so dass bei schwankendem Energieeintrag aus dem Verbrennungsprozess geringere zeitliche Schwankungen der Schadstoffkonzentration auftreten und auch bei Schwachlast eine gute Reinigungswirkung erhalten wird.

Gegenüber bekannten Abgasbehandlungseinrichtungen weist die erfindungsgemäße Abgasbehandlungseinrichtung den Vorteil auf, dass durch den definierten Strömungskanal eine stabile Strömung mit längeren Verweilzeiten erzielt werden kann. Darüber hinaus kann eine vorgebbare Oberflächenrauheit eingestellt werden.

In einigen Ausführungsformen der Erfindung kann zumindest eine Teilfläche des Körpers 13, welche bestimmungsgemäß bei Betrieb der Abgasbehandlungseinrichtung mit Abgas in Kontakt kommt, mit einer Beschichtung versehen sein. Eine solche Beschichtung kann katalytisch wirksam sein bzw. einen Katalysator enthalten. Ein solcher Katalysator kann dazu eingerichtet und bestimmt sein, die Oxidation von Kohlenwasserstoffen und/oder Kohlenmonoxid im Abgas zu fördern oder überhaupt zu ermöglichen. In einigen Ausführungsformen der Erfindung kann ein solcher Katalysator Platin und/oder Palladium enthalten oder daraus bestehen. Der Katalysator kann durch Aufdampfen und/oder Sputterbeschichtung und/oder Plasmaspritzen und/oder als Washcoat aufgebracht sein. Hierdurch kann der Schadstoffgehalt des Abgases reduziert sein.

Anhand der Figur 4 wird ein zweites Ausführungsbeispiel der erfindungsgemäßen Abgasbehandlungseinrichtung erläutert. Gleich Bestandteile der Erfindung sind mit gleichen Bezugszeichen versehen, so dass sich die nachfolgende Beschreibung auf die wesentlichen Unterschiede beschränkt.

Die zweite Ausführungsform unterscheidet sich von der vorstehend beschriebenen ersten Ausführungsform dadurch, dass der Körper 13 aus einer Mehrzahl gleichartiger Scheiben 24 zusammengesetzt ist, welche jeweils einen ersten Wandabschnitt 14 und einen zweiten Wandabschnitt 15 einstückig vereinen. Hierdurch kann der Aufbau der Abgasbehandlungseinrichtung vereinfacht werden, weil nur noch ein Typ von Scheiben 24 mit dem richtigen Drehwinkelversatz zueinander übereinander gestapelt werden muss, um die Abgasbehandlungseinrichtung in der gewünschten Länge herzustellen. Um den korrekten Drehwinkelversatz sicher zu stellen, können die Scheiben mit Bohrungen und Zapfen versehen sein, welche beim Stapeln formschlüssig ineinandergreifen, so dass die Scheiben 24 in vorgebbarer Weise übereinander ausgerichtet werden.

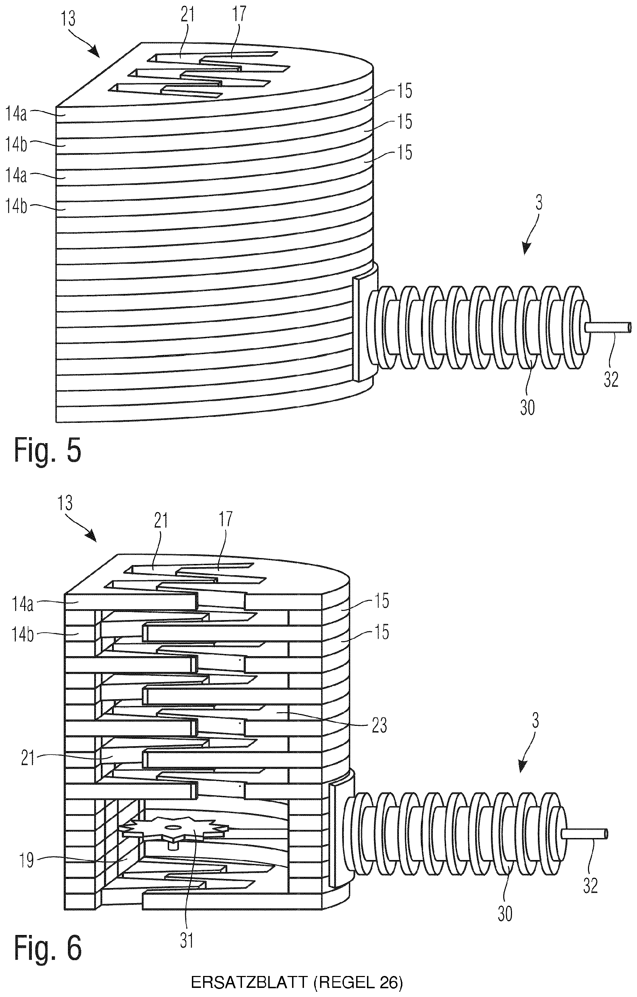

Anhand der Figuren 5 bis 9 wird ein drittes Ausführungsbeispiels einer erfindungsgemäßen Abgasbehandlungseinrichtung näher erläutert. Gleiche Bestandteile der Erfindung sind mit gleichen Bezugszeichen versehen, so dass sich die nachstehende Beschreibung auf die wesentlichen Unterschiede beschränkt.

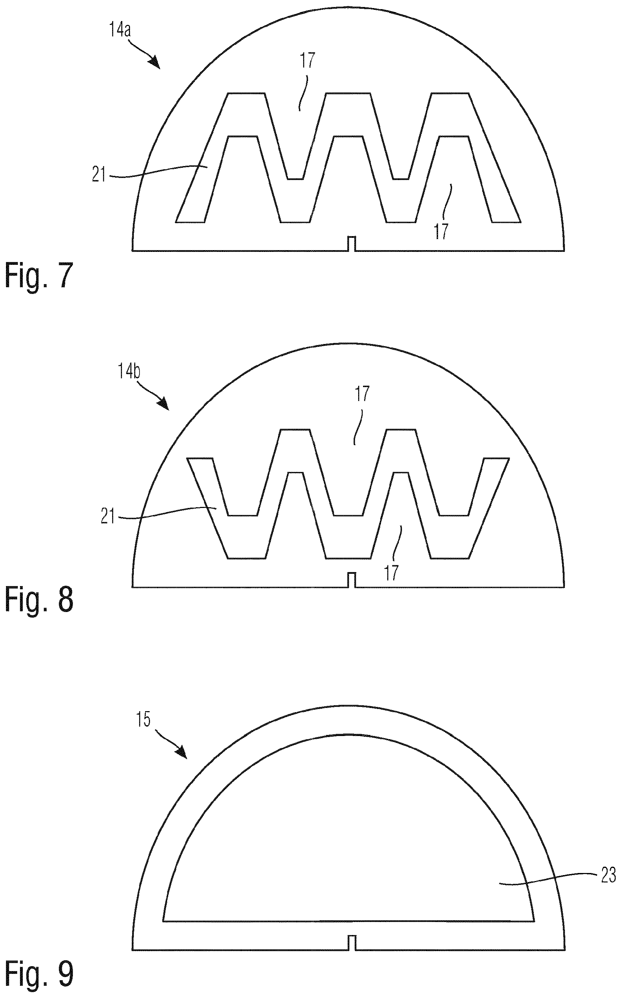

Dabei zeigt Figur 5 die betriebsbereite Abgasnachbehandlungseinrichtung, Figur 6 zeigt den Körper 13 im Schnitt, Figur 7 zeigt die Aufsicht auf erste Wandabschnitte 14a in einer ersten Variante, Figur 8 zeigt die Aufsicht auf erste Wandabschnitte 14b in einer zweiten Variante und Figur 9 zeigt die Aufsicht auf zweite Wandabschnitte 15.Die dritte Ausführungsform verwendet zwei unterschiedliche erste Wandabschnitte 14a und 14b, welche alternierend im Körper 13 eingesetzt und jeweils durch einen zweiten Wandabschnitt 15 voneinander getrennt sind. Die Außenkontur ist nicht zylindrisch wie im ersten Ausführungsbeispiel, sondern weist in etwa die Form einer halben Ellipse mit einer geraden Außenkante auf.

Wie insbesondere aus den Figuren 7 und 8 ersichtlich ist, sind die Vorsprünge 17 nicht radial angeordnet, sondern linear nebeneinander. Dabei greifen die Vorsprünge 17 mit der Basis an einer Seite der den Wandabschnitt 14a, 14b bildenden Platte in die Vorsprünge 17 mit der Basis an der gegenüberliegenden Seite der den Wandabschnitt 14a, 14b bildenden Platte kammartig ineinander. Die Vorsprünge 17 der erste Wandabschnitte 14a in der ersten Variante sind gegenüber den Vorsprüngen 17 der ersten Wandabschnitte 14b in der zweiten Variante um etwa eine halbe Basislänge verschoben, so dass die ersten Hohlraumabschnitte 21 der erste Wandabschnitte 14a in der ersten Variante von den Vorsprüngen 17 der ersten Wandabschnitte 14b in der zweiten Variante verdeckt werden und umgekehrt. Dieses Merkmal hat dieselbe Wirkung wie der vorstehend in Zusammenhang mit dem ersten Ausführungsbeispiel beschriebene Winkelversatz, so dass die Turbulenz im Rauchgas erhöht und die Verweilzeit verlängert wird.

Wie Figur 9 zeigt, weist auch im dritten Ausführungsbeispiel jeder zweite Wandabschnitt 15 eine Lochscheibe auf, die mindestens ein Loch aufweist, das den zweiten Hohlraumabschnitt 23 bildet.

In einigen Ausführungsformen der Erfindung kann die Abgasnachbehandlungseinrichtung weiterhin eine Einrichtung 3 zur elektrostatischen Staubabscheidung aufweisen. Diese umfasst zumindest eine Sprühelektrode 31, welche im Hohlraum 19 angeordnet und dazu eingerichtet ist, das Rauchgas einem elektrischen Feld auszusetzen. Die Sprühelektrode kann aus einem Metall oder einer Legierung bestehen. Die Sprühelektrode 31 kann mit einer optionalen Beschichtung versehen sein, welche beispielsweise eine dielektrisch behinderte Entladung ermöglicht und/oder die Austrittsarbeit für Elektronen reduziert und/oder die Oxidation oder Verschmutzung der Sprühelektrode verhindert oder reduziert. Die Sprühelektrode kann in einer Ausführungsform in etwa die Form eines zweiten Wandabschnitts 15 aufweisen, d.h. einen ringförmigen Längsabschnitt des Körpers 13 bilden. In anderen Ausführungsformen der Erfindung kann die Sprühelektrode 31 stabförmig oder tellerförmig sein und entlang der Längserstreckung des Körpers 13 verlaufen, beispielsweise auf dessen Längsachse 22.

Die Sprühelektrode ist bei Betrieb der Abgasbehandlungseinrichtung über einen elektrischen Leiter 32 mit einer nicht dargestellten Hochspannungsquelle verbunden. Die Durchführung des außenliegenden Leiters 32 in den Hohlraum 19 zur Sprühelektrode 31 kann mittels eines Isolators 30 erfolgen.

Die Hochspannungsquelle kann mittels eines Netzkabels oder batteriebetrieben oder durch einen Thermogenerator eine Primärspannung beziehen und an ihrem Ausgang eine Hochspannung abgeben, welche beispielsweise mehr als 10 kV oder mehr als 15 kV oder mehr als 20 kV oder mehr als 30 kV beträgt. Die Hochspannung kann geringer sein als 100 kV oder geringer als 50 kV oder geringer als 35 kV. In einigen Ausführungsformen der Erfindung kann die Feldstärke an der Sprühelektrode zwischen etwa 1 kV/mm und etwa 7 kV/mm oder zwischen etwa 0,7 kV/mm und 5 kV/mm betragen. Der von der Hochspannungsquelle bereitgestellte Strom kann zwischen etwa 0,1 mA und etwa 10 mA oder zwischen etwa 1 mA und etwa 5 mA oder zwischen etwa 0,2 mA und etwa 5 mA oder zwischen etwa 1 mA und etwa 3 mA betragen. Die von der Hochspannungsquelle bereitgestellte Leistung kann zwischen etwa 20 W und etwa 100 W oder zwischen etwa 25 W und etwa 40 W oder zwischen etwa 5 W und etwa 200 W betragen. Es hat sich gezeigt, dass der Ausstoß von Ultrafeinstäuben bei nur 20W elektrischer Leistung bereits um mehr als 80% sinkt, wobei die Reinigungswirkung bei höherer Leistung noch ansteigt.

Bei Betrieb der Hochspannungsquelle erzeugt somit die Sprühelektrode 31 ein elektrisches Feld. Die im Hohlraum 19 strömenden Rauchgase durchlaufen zumindest einen Längsabschnitt in der Abgasnachbe-handlungseinrichtung, in welchem diese einem elektrischen Feld ausgesetzt werden. Das elektrische Feld kann die Agglomeration von Feinstäuben und damit die Umsetzung von Feinstaub zu Grobstaub unterstützen. Darüber hinaus können die elektrisch geladenen Feinstäube elektrostatisch an den Wänden des Körpers 13 haften und dadurch aus dem Abgasstrom gefiltert werden. Durch diese Maßnahme kann somit die Wirksamkeit der erfindungsgemäßen Abgasnachbe-handlungseinrichtung weiter gesteigert werden.

In einigen Ausführungsformen der Erfindung kann die Sprühelektrode 31 dazu eingerichtet sein, Ozon und/oder atomaren Sauerstoff aus dem Restsauerstoff zu erzeugen, so dass Schadstoffe und Stäube effizient oxidiert werden können.

### Vergleichsbeispiel

Nachfolgend soll die Erfindung anhand eines Vergleichsbeispiels erläutert werden. Hierzu wird eine Kleinfeuerungsanlage in Form eines Kaminofens für Wohnräume mit Scheitholz betrieben. Der Betrieb erfolgte einmal mit und einmal ohne die erfindungsgemäße Abgasbehandlungseinrichtung. Der Schadstoffausstoß der Kleinfeuerungsanlage wird jeweils erfasst.

Die Kleinfeuerungsanlage emittiert ohne die erfindungsgemäße Abgasbehandlungseinrichtung 15·10⁶ Partikel/(s·cm³) Ultrafeinstaub mit einer Partikelgröße von 20 nm bis 350 nm. Bei Einsatz der erfindungsgemäßen Abgasbehandlungseinrichtung reduziert sich der Ausstoß von Ultrafeinstaub auf 8·10⁶ Partikel/(s·cm³). Wird zusätzlich eine Sprühelektrode in der Abgasbehandlungseinrichtung eingesetzt und mit einer elektrischen Spannung von 25 kV bei einer elektrischen Leistung von 30 W beaufschlagt, sinkt der Ausstoß von Ultrafeinstaub weiter auf 4·10⁶ Partikel/(s·cm³).

Der Ausstoß von Grobstaub mit einer Partikelgröße von mehr als 10 µm konnte durch den Einsatz der erfindungsgemäßen Abgasbehandlungseinrichtung um 60% reduziert werden. Auch für gasförmige Schadstoffe wie CO und CₙHₓ konnte eine erhebliche Reduktion erzielt werden, welche darüber hinaus auch bei schwankender thermischer Leistung der Kleinfeuerungsanlage konstant niedrig blieb.

## Patentansprüche

1. Abgasbehandlungseinrichtung zur Behandlung von Abgas aus einem Verbrennungsprozess, mit einem hitzebeständigen Körper (13), der einen an gegenüberliegenden Enden offenen Hohlraum (19) begrenzt, welcher dafür bestimmt ist, vom Abgas durchströmt zu werden, wobei der Körper (1) eine Mehrzahl von ersten Wandabschnitten (14) aufweist, von denen jeder einen jeweiligen ersten Abschnitt (21) des Hohlraumes (19) begrenzt, wobei jeder erste Wandabschnitt (14) einen äußeren Bereich (16) und einen inneren Bereich hat, der eine Mehrzahl von plattenförmigen Vorsprüngen (17) aufweist, die sich jeweils vom äußeren Bereich (16) ausgehend nach innen in den jeweiligen ersten Hohlraumabschnitt (21) hinein erstrecken, wobei sie sich in ihrer quer zur Längserstreckung gerichteten Breite entlang der Längserstreckung verjüngen und seitlich voneinander beabstandet sind, wobei jeder plattenförmige Vorsprung (17) eines ersten Wandabschnittes (14) relativ zu einem plattenförmigen Vorsprung (17) eines benachbarten ersten Wandabschnittes (14) verdreht bzw. verschoben ist,
wobei der Körper (13) eine Mehrzahl von zweiten Wandabschnitten (15) aufweist, von denen jeder einen jeweiligen zweiten Abschnitt (23) des Hohlraumes (19) begrenzt und jeweils zwischen zwei benachbarten ersten Wandabschnitten (14) angeordnet ist, **dadurch gekennzeichnet, dass** die Querschnittsfläche eines jeden zweiten Hohlraumabschnittes (23) größer ist als die Querschnittsfläche eines jeden ersten Hohlraumabschnittes (21) .

2. Abgasbehandlungseinrichtung nach Anspruch 1, **dadurch gekennzeichnet, dass** die ersten Wandabschnitte (14) und die zweiten Wandabschnitte (15) eine zylindrische Form haben und/oder dass jeder zweite Wandabschnitt (15) des Körpers (13) eine Platte mit mindestens einem zylindrischen Loch ist, welches den zweiten Hohlraumabschnitt (23) bildet.

3. Abgasbehandlungseinrichtung nach Anspruch 2, **dadurch gekennzeichnet, dass** der Durchmesser von jedem zweiten Hohlraumabschnitt (23) größer als der Abstand zwischen zwei sich gegenüberliegenden inneren Begrenzungsflächen des äußeren Bereichs (16) des jeweiligen ersten Wandabschnittes (14) ist, wobei die sich gegenüberliegenden inneren Begrenzungsflächen des äußeren Bereichs (16) quer zur Längsachse (22) des Hohlraumes (19) gebogen sind oder geradlinig verlaufen.

4. Abgasbehandlungseinrichtung nach Anspruch 3, **dadurch gekennzeichnet, dass** der Abstand zwischen zwei sich gegenüberliegenden inneren Begrenzungsflächen des äußeren Bereichs (16) des jeweiligen ersten Wandabschnittes (14) ein durch den Mittelpunkt des ersten Hohlraumabschnittes (21) gehender Durchmesser ist.

5. Abgasbehandlungseinrichtung nach Anspruch 1, **dadurch gekennzeichnet, dass** die ersten Wandabschnitte (14) und die zweiten Wandabschnitte (15) eine elliptische oder polygonale Form haben oder
dass die ersten Wandabschnitte (14) und die zweiten Wandabschnitte (15) zumindest eine ebene Begrenzungsfläche aufweisen.

6. Abgasbehandlungseinrichtung nach einem der Ansprüche 1 bis 4, **dadurch gekennzeichnet, dass** jeder zweite Wandabschnitt (15) eine Lochscheibe ist, die mindestens ein Loch aufweist, das den zweiten Hohlraumabschnitt (23) bildet.

7. Abgasbehandlungseinrichtung nach Anspruch 1 oder 6,**dadurch gekennzeichnet, dass** jeweils ein erster Wandabschnitt (14) und ein benachbarter zweiter Wandabschnitt (15) einstückig gefertigt ist oder
dass die ersten und/oder die zweiten Wandabschnitte (14,15) jeweils separate Einzelelemente sind, die entlang einer Längsachse des Körpers (13) gestapelt sind oder dass der Körper (13) aus einem einzelnen Block besteht, bei dem die ersten und zweiten Wandabschnitte (14, 15) jeweils einstückig miteinander verbunden sind.

8. Abgasbehandlungseinrichtung nach einem der Ansprüche 1 bis 7, **dadurch gekennzeichnet, dass** die Dicke der zweiten Wandabschnitte (15) zwischen etwa 0,8 bis etwa 5 oder zwischen etwa 0,8 bis etwa 3 mal der Dicke der ersten Wandabschnitte (14) entspricht.

9. Abgasbehandlungseinrichtung nach einem der Ansprüche 1 bis 4, **dadurch gekennzeichnet, dass** die plattenförmigen Vorsprünge (17) eine Dicke von etwa 5 mm bis etwa 50 mm oder von etwa 5 mm bis etwa 15 mm oder von etwa 5 mm etwa 8 mm oder von etwa 25 mm bis etwa 50 mm aufweisen.

10. Abgasbehandlungseinrichtung nach einem der Ansprüche 1 bis 9, **dadurch gekennzeichnet, dass** die Gesamthöhe des Körpers (13) zwischen etwa 12 cm und etwa 20 cm oder zwischen etwa 15 cm und etwa 25 cm beträgt oder
dass die Masse des Körpers (13) zwischen etwa 7 kg und etwa 10 kg beträgt.

11. Abgasbehandlungseinrichtung nach einem der Ansprüche 1 bis 4, weiterhin enthaltend zumindest eine Sprühelektrode (3), welche dazu eingerichtet ist, den Abgasstrom einem eletrischen Feld auszusetzen oder
weiterhin enthaltend zumindest eine Sprühelektrode, welche dazu eingerichtet ist, den Abgasstrom einem elektrischen Feld von etwa 0,7 kV/mm bis etwa 7 kV/mm auszusetzen.

12. Abgasbehandlungseinrichtung nach einem der Ansprüche 1 bis 11, **dadurch gekennzeichnet, dass** der der Sprühelektrode (3) zugeführte Strom zwischen etwa 0,1 mA und etwa 10 mA beträgt oder
dass die der Sprühelektrode (3) zugeführte Leistung zwischen etwa 20 W und etwa 100 W oder zwischen etwa 5 W und etwa 200 W beträgt.

13. Abgasbehandlungseinrichtung nach einem der Ansprüche 1 bis 12, **dadurch gekennzeichnet, dass** zumindest eine Teilfläche des Körpers (13), welche bestimmungsgemäß bei Betrieb der Abgasbehandlungseinrichtung mit Abgas in Kontakt kommt, mit einer Beschichtung versehen ist

14. Abgasbehandlungseinrichtung nach Anspruch 13, **dadurch gekennzeichnet, dass** die Beschichtung katalytisch wirksam ist oder einen Katalysator enthält.

15. Kleinfeuerungsanlage mit einer Abgasbehandlungseinrichtung nach einem der Ansprüche 1 bis 14.

## Claims

1. Exhaust gas treatment device for treating exhaust gas from a combustion process, comprising a heat-resistant body (13) delimiting a cavity (19) which is open at opposite ends and intended for the exhaust gas to flow therethrough, the body (1) having a plurality of first wall portions (14), all of which delimit a respective first portion (21) of the cavity (19), each first wall portion (14) having an outer region (16) and an inner region, which has a plurality of planar protrusions (17), all of which extend from the outer region (16) inward into the respective first cavity portion (21), the planar protrusions tapering along the longitudinal extension in their width directed transversely to the longitudinal extension and being mutually laterally spaced, each planar protrusion (17) of a first wall portion (14) being rotated or shifted relative to a planar protrusion (17) of an adjacent first wall portion,
the body (13) having a plurality of second wall portions (15), each of which delimits a respective second portion (23) of the cavity (19) and is arranged in each case between two adjacent first wall portions (14), **characterized in that** the cross-sectional area of each second cavity portion (23) is larger than the cross-sectional area of each first cavity portion (21).

2. Exhaust gas treatment device according to claim 1, **characterized in that** the first wall portions (14) and the second wall portions (15) have a cylindrical shape and/or
**in that** each second wall portion (15) of the body (13) is a plate having at least one cylindrical hole which forms the second cavity portion (23).

3. Exhaust gas treatment device according to claim 2, **characterized in that** the diameter of each second cavity portion (23) is larger than the distance between two opposite inner delimiting surfaces of the outer region (16) of the respective first wall portion (14), the opposite inner delimiting surfaces of the outer region (16) being curved transversely to the longitudinal axis (22) of the cavity (19) or extending in a straight line.

4. Exhaust gas treatment device according to claim 3, **characterized in that** the distance between two opposite inner delimiting surfaces of the outer region (16) of the respective first wall portion (14) is a diameter passing through the center of the first cavity portion (21).

5. Exhaust gas treatment device according to claim 1, **characterized in that** the first wall portions (14) and the second wall portions (15) have an elliptical or polygonal shape or
**in that** the first wall portions (14) and the second wall portions (15) have at least one flat delimiting surface.

6. Exhaust gas treatment device according to any one of claims 1 to 4, **characterized in that** each second wall portion (15) is a perforated disk having at least one hole forming the second cavity portion (23).

7. Exhaust gas treatment device according to claim 1 or 6, **characterized in that** in each case a first wall portion (14) and an adjacent second wall portion (15) are made in one piece or
**in that** the first and/or the second wall portions (14, 15) are each separate individual elements which are stacked along a longitudinal axis of the body (13), or
**in that** the body (13) consists of a single block in which the first and second wall portions (14, 15) are each connected to one another in one piece.

8. Exhaust gas treatment device according to any one of claims 1 to 7, **characterized in that** the thickness of the second wall portions (15) corresponds to between about 0.8 to about 5 or between about 0.8 to about 3 times the thickness of the first wall portions (14).

9. Exhaust gas treatment device according to any one of claims 1 to 4, **characterized in that** the planar protrusions (17) have a thickness of about 5 mm to about 50 mm or of about 5 mm to about 15 mm or of about 5 mm to about 8 mm or of about 25 mm to about 50 mm.

10. Exhaust gas treatment device according to any one of claims 1 to 9, **characterized in that** the total height of the body (13) is between about 12 cm and about 20 cm or between about 15 cm and about 25 cm or
**in that** the mass of the body (13) is between about 7 kg and about 10 kg.

11. Exhaust gas treatment device according to any one of claims 1 to 4, further comprising at least one spray electrode (3) which is designed to expose the exhaust gas flow to an electric field or
further comprising at least one spray electrode which is designed to expose the exhaust gas flow to an electric field of about 0.7 kV/mm to about 7 kV/mm.

12. Exhaust gas treatment device according to any one of claims 1 to 11, **characterized in that** the current supplied to the spray electrode (3) is between about 0.1 mA and about 10 mA or
**in that** the power supplied to the spray electrode (3) is between about 20 W and about 100 W or between about 5 W and about 200 W.

13. Exhaust gas treatment device according to any one of claims 1 to 12, **characterized in that** at least one partial surface of the body (13), which as intended comes into contact with exhaust gas during the operation of the exhaust gas treatment device, is provided with a coating.

14. Exhaust gas treatment device according to claim 13, **characterized in that** the coating is catalytically active or contains a catalyst.

15. Small combustion installation comprising an exhaust gas treatment device according to any one of claims 1 to 14.

## Revendications

1. Dispositif de traitement de gaz d'échappement destiné à traiter des gaz d'échappement issus d'un processus de combustion, comprenant un corps résistant à la chaleur (13) qui définit une cavité (19) ouverte à ses extrémités opposées, destinée à être traversée par des gaz d'échappement, dans lequel
le corps (1) comporte une pluralité de premières portions de paroi (14) dont chacune définit une première portion respective (21) de la cavité (19),
chaque première portion de paroi (14) présente une zone extérieure (16) et une zone intérieure munie d'une pluralité de projections en forme de plaque (17) qui s'étendent chacune depuis la zone extérieure (16) vers l'intérieur jusque dans la première portion de cavité respective (21) et dont la largeur, dirigée transversalement à l'extension longitudinale, se rétrécit le long de l'extension longitudinale, et qui sont espacées latéralement les unes des autres,
chaque projection en forme de plaque (17) d'une première portion de paroi (14) est décalée en rotation ou en translation par rapport à une projection en forme de plaque (17) d'une première portion de paroi (14) adjacente,
le corps (13) comporte une pluralité de deuxièmes portions de paroi (15) dont chacune définit une deuxième portion respective (23) de la cavité (19) et qui sont disposées chacune entre deux premières portions de paroi (14) adjacentes,
**caractérisé en ce que** la superficie en section transversale de chaque deuxième portion (23) de la cavité est supérieure à la superficie en section transversale de chaque première portion (21) de la cavité.

2. Dispositif de traitement de gaz d'échappement selon la revendication 1, **caractérisé en ce que** les premières portions de paroi (14) et les deuxièmes portions de paroi (15) ont une forme cylindrique, et/ou
chaque deuxième portion de paroi (15) du corps (13) est une plaque munie d'au moins un trou cylindrique qui forme la deuxième portion (23) de la cavité.

3. Dispositif de traitement de gaz d'échappement selon la revendication 2, **caractérisé en ce que** le diamètre de chaque deuxième portion (23) de la cavité est plus grand que la distance entre deux surfaces limites intérieures, opposées l'une à l'autre, de la zone extérieure (16) de la première portion de paroi (14) respective, et les surfaces limites intérieures, opposées l'une à l'autre, de la zone extérieure (16) sont courbées transversalement à l'axe longitudinal (22) de la cavité (19) ou s'étendent en ligne droite.

4. Dispositif de traitement de gaz d'échappement selon la revendication 3, **caractérisé en ce que** la distance entre deux surfaces limites intérieures, opposées l'une à l'autre, de la zone extérieure (16) de la première portion de paroi (14) respective est un diamètre passant par le centre de la première portion (21) de la cavité.

5. Dispositif de traitement de gaz d'échappement selon la revendication 1, **caractérisé en ce que** les premières portions de paroi (14) et les deuxièmes portions de paroi (15) ont une forme elliptique ou polygonale, ou
**en ce que** les premières portions de paroi (14) et les deuxièmes portions de paroi (15) présentent au moins une surface limite plane.

6. Dispositif de traitement de gaz d'échappement selon l'une des revendications 1 à 4,
**caractérisé en ce que** chaque deuxième portion de paroi (15) est un disque perforé muni d'au moins un trou qui forme la deuxième portion (23) de la cavité.

7. Dispositif de traitement de gaz d'échappement selon la revendication 1 ou 6,
**caractérisé en ce qu'**une première portion de paroi (14) respective et une deuxième portion de paroi (15) adjacente sont fabriquées d'un seul tenant, ou
**en ce que** les premières et/ou deuxièmes portions de paroi (14, 15) sont chacune des éléments individuels distincts empilés le long d'un axe longitudinal du corps (13), ou
**en ce que** le corps (13) est constitué d'un bloc unique dans lequel les premières et deuxièmes portions de paroi (14, 15) respectives sont reliées d'un seul tenant.

8. Dispositif de traitement de gaz d'échappement selon l'une des revendications 1 à 7,
**caractérisé en ce que** l'épaisseur des deuxièmes portions de paroi (15) est comprise entre environ 0,8 et environ 5 fois, ou entre environ 0,8 et environ 3 fois, l'épaisseur des premières portions de paroi (14).

9. Dispositif de traitement de gaz d'échappement selon l'une des revendications 1 à 4,
**caractérisé en ce que** les projections en forme de plaque (17) ont une épaisseur comprise entre environ 5 mm et environ 50 mm, ou entre environ 5 mm et environ 15 mm, ou entre environ 5 mm et environ 8 mm, ou entre environ 25 mm et environ 50 mm.

10. Dispositif de traitement de gaz d'échappement selon l'une des revendications 1 à 9,
**caractérisé en ce que** la hauteur totale du corps (13) est comprise entre environ 12 cm et environ 20 cm, ou entre environ 15 cm et environ 25 cm, ou
**en ce que** la masse du corps (13) est comprise entre environ 7 kg et environ 10 kg.

11. Dispositif de traitement de gaz d'échappement selon l'une des revendications 1 à 4,
comprenant en outre au moins une électrode de pulvérisation (3) conçue pour soumettre le flux de gaz d'échappement à un champ électrique, ou
comprenant en outre au moins une électrode de pulvérisation conçue pour soumettre le flux de de gaz d'échappement à un champ électrique d'environ 0,7 kV/mm à environ 7 kV/mm.

12. Dispositif de traitement de gaz d'échappement selon l'une des revendications 1 à 11,
**caractérisé en ce que** le courant fourni à l'électrode de pulvérisation (3) est compris entre environ 0,1 mA et environ 10 mA, ou
**en ce que** la puissance fournie à l'électrode de pulvérisation (3) est comprise entre environ 20 W et environ 100 W, ou entre environ 5 W et environ 200 W.

13. Dispositif de traitement de gaz d'échappement selon l'une des revendications 1 à 12,
**caractérisé en ce qu'**au moins une partie de la surface du corps (13), destinée à entrer en contact avec des gaz d'échappement pendant le fonctionnement du dispositif de traitement de gaz d'échappement, est pourvue d'un revêtement.

14. Dispositif de traitement de gaz d'échappement selon la revendication 13, **caractérisé en ce que** le revêtement est actif sur le plan catalytique ou contient un catalyseur.

15. Installation de chauffage à petite échelle, comportant un dispositif de traitement de gaz d'échappement selon l'une des revendications 1 à 14.
